# EUROPÄISCHE PATENTSCHRIFT

(11) **EP 3 280 303 B1**
(45) Veröffentlichungstag und Bekanntmachung des Hinweises auf die Patenterteilung: **09.12.2020**
(21) Anmeldenummer: 16715829.4
(22) Anmeldetag: 06.04.2016
(51) Int. Cl.: A47J 31/52

(54) **GETRÄNKEAUTOMAT SOWIE VERFAHREN ZUM BETRIEB EINES SOLCHEN GETRÄNKEAUTOMATEN**
DRINKS MACHINE AND A METHOD FOR OPERATING SUCH A DRINKS MACHINE
DISTRIBUTEUR AUTOMATIQUE DE BOISSONS ET PROCÉDÉ PERMETTANT DE FAIRE FONCTIONNER LEDIT DISTRIBUTEUR AUTOMATIQUE DE BOISSONS

(30) Priorität: 08.04.2015 CH 4832015
(43) Veröffentlichungstag der Anmeldung: 14.02.2018
(73) Patentinhaber: Schaerer AG, 4528 Zuchwil (CH)
(72) Erfinder: EGLI, Peter, 3053 Münchenbuchsee (CH); LÜSSI, André, 3303 Jegensdorf (CH)
(74) Vertreter: IPrime Rentsch Kaelin AG
(86) Internationale Anmeldenummer: PCT/EP2016/057482
(87) Internationale Veröffentlichungsnummer: WO 2016/162361

(56) Entgegenhaltungen:
- WO-A1-2010/003932
- WO-A1-2011/067191
- WO-A1-2011/147821
- WO-A1-2013/037782
- DE-A1-102009 059 175
- US-A1- 2013 087 050

## Beschreibung

### TECHNISCHES GEBIET

Die vorliegende Erfindung bezieht sich auf das Gebiet der Verkaufsautomaten. Sie betrifft einen Getränkeautomaten gemäss dem Oberbegriff des Anspruchs 1.

Sie betrifft weiterhin ein Verfahren zum Betrieb eines solchen Getränkeautomaten.

### STAND DER TECHNIK

Kaffeemaschinen werden immer mehr nicht bedient betrieben. Sie stehen dann beispielsweise als Kaffeeautomaten (siehe z.B. die EP 0 538 191 A1) zur Selbstbedienung auf einer Theke zusammen mit Esswaren; sie können aber auch, insbesondere als sogenannte Kiosklösung (siehe z.B. die USD 541351 S1 oder die US 2009/293733 A1), freistehend im Raum in einem Verkaufsladen (Convenience Store) oder dgl. aufgestellt sein.

Es ist in dieser Umgebung nicht die erste Motivation eines Kunden, der in einen Verkaufsladen tritt, Kaffee zu trinken, zumal er von einer Vielzahl anderer Konsummöglichkeiten abgelenkt oder angezogen wird.

Somit wäre für den Betreiber des Getränkeautomaten wünschenswert, wenn die Kaffeemaschine bzw. der Getränkeautomat von sich aus aktiv auf sich aufmerksam machen würde.

Auch in anderer Umgebung kann es für den Gerätebetreiber von Vorteil sein, wenn eine am Gerät vorbeikommende Person dazu animiert werden kann, ein Getränk aus der Maschine zu beziehen.

WO 2011/147821 A1 zeigt einen Getränkeautomaten mit einer grafischen Benutzerschnittstelle mit mehreren Tasten zur mechanischen Betätigen durch einen Benutzer und einem grafischen Identifikationselement, das der jeweiligen Taste zugeordnet ist, und mit einer Anzeige zum Anzeigen von Informationen über die Getränke und einer Mehrzahl von auswählbaren und dynamisch zugewiesenen Funktionen durch Drücken der entsprechenden Taste. Die Anzeige ist von der Benutzerschnittstelle getrennt, und stellt eine aktuell eingestellte Zuordnung der jeweiligen Tasten der Benutzerschnittstelle zu einer von mehreren Funktionen grafisch dar.

US 2013/087050 A1 zeigt ein System zur Erzeugung von Getränken, umfassend einen zentralen Host mit einer Datenbank, sowie einem Kiosk-Modul, welches für die Kommunikation mit dem zentralen Host konfiguriert ist. Das Kiosk-Modul umfasst eine elektronische Steuereinheit, mehrere Prozessmodule und eine Speichervorrichtung. Jedes Prozessmodul des Kiosk-Moduls ist so konfiguriert, dass es von der elektronischen Steuereinheit gesteuert wird, um bestimmte Prozesse in der Getränkeherstellung auszuführen. Für den Betrieb des Kiosk-Moduls erforderliche Informationen sind in der Datenbank des zentralen Hosts und auch in der Speichervorrichtung des Kiosk-Moduls gespeichert, damit das Kiosk-Modul unabhängig vom zentralen Host arbeiten kann, falls die Kommunikation zwischen dem Kiosk-Modul und dem zentralen Host beeinträchtigt ist.

WO 2010/003932 A1 zeigt einen Getränkeautomaten mit einem auf dem Gehäuse des Getränkeautomaten angebrachten und dem Benutzer zugewandten Bildschirm mit einer Benutzeroberfläche. Der Bildschirm entspricht im Wesentlichen dem gesamten für den Benutzer sichtbaren Gehäuse.

WO 2013/037782 A1 zeigt einen Getränkeautomaten mit einer Basis mit einem Fluidkreislauf zum Konditionieren und Fördern eines Fluids über einen Basisauslass, einer Basisdatenschnittstelle, und einem entfernbaren Modul mit einem Moduleinlass und einer Moduldatenschnittstelle, die trennbar mit dem Basisauslass bzw. der Basisdatenschnittstelle verbunden werden können. Es kann ein Benutzerinterface vorgesehen sein.

DE 102009059175 A1 beschreibt ein elektrisches Haushaltsgerät, insbesondere ein Getränkezubereitungsgerät, welches über ein elektronisches Steuergerät zur Ausführung verschiedener Steuerfunktionen durch Auslösen entsprechender Schaltelemente verfügt. Ein akustischer Signalsender erzeugt unterschiedliche, für den Benutzer angenehme akustische Signale, mit unterschiedlichen Tonhöhen, akustischen Wellenformen, Schallpegeln oder Schallpegelhüllkurven. Die Steuerfunktionen sind verschiedenen akustischen Signalen zugeordnet, die als elektronische Informationen in einem elektronischen Speicher gespeichert sind.

WO 2011/067191 A1 beschreibt einen Getränkeautomaten mit einer virtuellen Einkaufsfunktionalität. Der Getränkeautomaten umfasst einen Touchscreen, welcher ein Bild eines Innenraums eines Geschäfts anzeigt, welches Waren anbietet, die sich auf den Getränkeautomaten beziehen. Der Benutzer kann eine entsprechende Ware durch Berühren des Touchscreens aussuchen und zur Zubereitung des Getränks kaufen.

### DARSTELLUNG DER ERFINDUNG

Es ist daher eine Aufgabe der Erfindung, einen Getränkeautomaten bereitzustellen, welcher in einer in der Nähe befindlichen Person Aufmerksamkeit und Emotionen weckt, die dazu führen, dass die Person sich dem Automaten zuwendet und die Wahrscheinlichkeit steigt, dass er ein Getränk aus dem Automaten bezieht.

Es ist weiterhin eine Aufgabe der Erfindung, ein Verfahren zum Betrieb eines solchen Getränkeautomaten anzugeben, mit dem auf automatisierte und einfache Weise in einer sich dem Gerät nähernden Person entsprechende Emotionen und Wünsche geweckt werden.

Diese und andere Aufgaben werden durch die Merkmale der Ansprüche 1 und 9 gelöst.

Ein Getränkeautomat gemäss der Erfindung umfasst erste Einrichtungen zur Erzeugung und Ausgabe von Getränken, sowie zweite Einrichtungen für die Bedienung durch den jeweiligen Kunden bzw. Konsumenten.

Er zeichnet sich dadurch aus, dass der Getränkeautomat zusätzlich Interaktionsmittel aufweist, mit welchen eine in der Nähe des Getränkeautomaten befindliche Person über eine sachbezogene Information hinaus emotional angesprochen werden kann.

Ein erfindungsgemässer Getränkeautomat ist weiter dadurch gekennzeichnet, dass die zusätzlichen Interaktionsmittel eine Interaktionssteuerung umfassen, welche mit dritten Einrichtungen für eine akustische und/oder optische und /oder olfaktorische Interaktion mit der in der Nähe befindlichen Person verbunden ist. Eine Interaktion findet in diesem Zusammenhang statt, wenn die Person mit Ohr, Auge oder Nase die vom Automaten ausgesendeten Klänge, Lichteffekte oder Gerüche empfängt und darauf reagiert bzw. reagieren kann. Insbesondere umfassen die dritten Einrichtungen eines erfindungsgemässen Getränkeautomaten einen akustischen Wandler und/oder eine Lichtquelle und/oder einen Geruchsemitter.

Insbesondere weist ein erfindungsgemässer Getränkeautomat einen Personensensor zur Detektion einer in der Nähe des Getränkeautomaten befindlichen Person auf, wobei der Personensensor mit der Interaktionssteuerung in Verbindung steht, und das Bewegungsprofil der Person aufnehmen kann.

Die Detektion kann dabei über einen Näherungssensor, eine Kamera mit Bildverarbeitung, aber auch über Lichtschranken oder durch Erkennen eines von der Person mitgeführten Mobiltelefons oder einer von der Person getragenen Erkennungsmarke, wie sie in Unternehmen üblich sind, erfolgen.

Insbesondere sind die dritten Einrichtungen in den Getränkeautomaten integriert.

Insbesondere umfasst der Getränkeautomat eine Maschinensteuerung für die Erzeugung und Ausgabe von Getränken, wobei die Interaktionssteuerung mit der Maschinensteuerung verbunden ist oder in die Maschinensteuerung integriert ist. Dies kann insbesondere im Rahmen einer Mikroprozessor-Steuerung der Fall sein, bei der sowohl die Maschinensteuerung als auch die Interaktionssteuerung in derselben CPU implementiert ist.

Insbesondere kann der Getränkeautomat einen Zusatzsensor, insbesondere zur Detektion von Umwelteinflüssen wie Temperatur, Helligkeit, Feuchtigkeit, Luftdruck usw., aufweisen, wobei der Zusatzsensor mit der Interaktionssteuerung in Verbindung steht. Hierdurch ist es z.B. möglich, im Sommer eher auf kalte Getränke aufmerksam zu machen, im Winter dagegen eher auf warme Getränke. Am Morgen kann auf anregende Getränke, am Abend eher auf beruhigende Getränke abgestellt werden.

Insbesondere kann der Getränkeautomat Anzeigeeinrichtungen aufweisen, wobei die Interaktionssteuerung mit den Anzeigeeinrichtungen in Verbindung steht.

Hierdurch ist es möglich, die Interaktion mittels des für den normalen Betrieb ohnehin vorhandenen Displays durchzuführen, indem beispielsweise die ganze Displayfläche mit periodisch wechselnder Helligkeit betrieben wird und in mehr oder weniger schnellem Rhythmus "atmet" oder pulsiert. Es können aber auch bewegte Bilder, Filmsequenzen oder über das Display bewegte Figuren oder Zeichen dargestellt werden, um die Aufmerksamkeit des potentiellen Kunden zu erregen und zu fesseln. Insbesondere ist es denkbar, die bei der Getränkezubereitung ablaufenden Vorgänge wie Kaffeebohnen mahlen, Wasser erhitzen, Brühen, Milch aufschäumen (für Cappuccino und dgl.), Brührückstand auswerfen etc. filmisch dazustellen, um den Kunden an der Zubereitung des Getränks unmittelbar optisch teilhaben zu lassen.

Insbesondere kann der Getränkeautomat eine Kommunikationseinheit aufweisen, wobei die Interaktionssteuerung mit der Kommunikationseinheit in Verbindung steht.

Hierdurch ist es möglich, die Interaktion durch (drahtlose) Eingabe von Parametern, Vorgaben und dgl. von aussen (z.B. über das Internet) fernzusteuern oder zu beeinflussen.

Insbesondere ist der Getränkeautomat über die Kommunikationseinheit drahtgebunden oder drahtlos mit dem Internet oder einer anderen Datenübertragungsverbindung verbunden, um sich Informationen geeigneter Art zu holen oder zu empfangen und die Informationen mit den Interaktions-Aktivitäten zu verknüpfen und/oder weiterzugeben. Der Getränkeautomat ist vorzugsweise ein Kaffeeautomat oder umfasst einen Kaffeeautomaten.

Das erfindungsgemässe Verfahren zum Betrieb eines Getränkeautomaten nach der Erfindung zeichnet sich dadurch aus, dass die Interaktionsmittel situationsbezogen aktiviert werden, wenn sich eine Person dem Getränkeautomaten nähert und von diesem erkannt wird.

Hierbei ist es insbesondere möglich, je nach Richtung der Bewegung der Person ("Kommen oder Gehen") unterschiedlich zu reagieren. Die Reaktion kann auch je nach Alter oder Geschlecht der Person unterschiedlich ausfallen, wenn diese Eigenschaften von der Maschine erkannt werden können.

Bei einem erfindungsgemässen Verfahren ist die Aktivierung der Interaktionsmittel mit einer akustischen und/oder optischen und /oder olfaktorischen Interaktion mit der in der Nähe befindlichen Person verbunden.

Gemäss einer anderen Ausgestaltung des erfindungsgemässen Verfahrens werden die Interaktionsmittel nach Massgabe zusätzlicher externer Parameter wie Jahreszeit, Tageszeit, Wetter, Temperatur, Helligkeit, Feuchtigkeit, Luftdruck usw. aktiviert.

Durch das Eingehen auf derartige "äussere Umstände" kann die Wahrscheinlichkeit erhöht werden, dass die angesprochene Person positiv auf die Interaktion reagiert und den Getränkeautomaten benutzt.

Insbesondere umfasst die akustische Interaktion Musik und/oder Sprache und/oder Geräusche. Die Musik kann dabei je nach Absicht beruhigend, aggressiv, einschmeichelnd, romantisch, klassisch usw. oder Länder-bezogen (z.B. italienisch) sein. Ähnliches gilt für die Sprache und die ausgewählten Texte oder Botschaften. Geräusche können sich direkt auf die Getränkezubereitung beziehen (Mahlgeräusch, Aufschäumgeräusch etc.), können aber auch ohne realen Bezug zur Auslösung bestimmter Emotionen dienen.

Insbesondere umfasst die optische Interaktion Lichteffekte, insbesondere mit zeitlich, z.B. periodisch, sich ändernder Farbe und/oder Intensität.

Insbesondere umfasst die olfaktorische Interaktion das Aussenden von wohlriechenden Düften, insbesondere Kaffeeduft, Vanille, Zimt etc.. Hierbei ist es denkbar, den beim Mahlen oder Brühen des Kaffee entstehenden Duft in der Maschine abzusaugen und gezielt in die Umgebung abzugeben.

Schliesslich können über eine Kommunikationseinheit drahtgebunden oder drahtlos über das Internet oder eine andere Datenübertragungsverbindung Informationen geeigneter Art geholt oder empfangen und die Informationen mit den Interaktions-Aktivitäten verknüpft und/oder weitergegeben werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: einen als Tischgerät ausgebildeten Kaffeeautomaten der Anmelderin, wie er auf dem Markt erhältlich ist;
- Fig. 2: den stark vereinfachten herkömmlichen inneren Aufbau eines solchen Kaffeeautomaten; und
- Fig. 3: den zu Fig. 2 vergleichbaren inneren Aufbau eines Kaffeeautomaten gemäss einem Ausführungsbeispiel der Erfindung.

### WEGE ZUR AUSFÜHRUNG DER ERFINDUNG

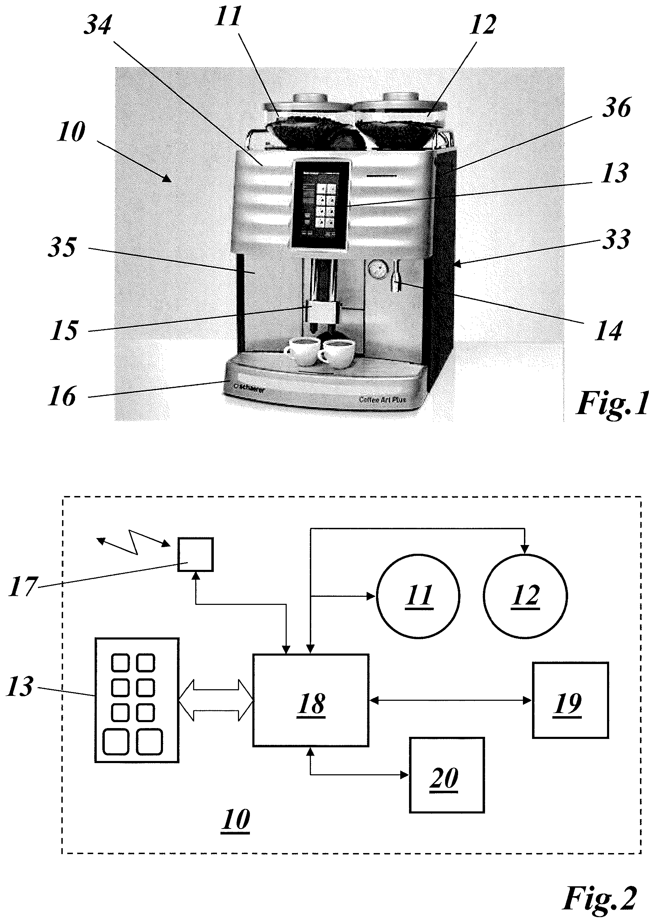

Fig. 1 zeigt in einem Foto einen als Tischgerät ausgebildeten Kaffeeautomaten der Anmelderin vom Typ "Coffee Art Plus", wie er auf dem Markt erhältlich ist. Der Kaffeeautomat 10 ist in einem Gehäuse 33 untergebracht, das an der Vorderseite eine obere Vorderwand 34 mit einer darin eingelassenen kombinierten Bedien- und Anzeigeeinheit (mit Display) 13 und nach hinten versetzt eine untere Vorderwand 35 aufweist. Im Bereich der unteren Vorderwand 35 ist eine einschiebbare Auffangschale 16 mit Tropfgitter angeordnet, auf die unter die darüber positionierte Auslasseinheit 15 für das Getränk zum Auffangen eine Tasse oder ein Bescher gestellt werden kann. An den Seiten des Gehäuses 33 sind entsprechende Seitenwände 36 vorgesehen, von denen in der Darstellung nur die eine sichtbar ist. Nach oben ragen aus dem Gehäuse 33 die Bohnenbehälter von zwei nebeneinander angeordneten Kaffeemühleneinheiten 11 und 12 heraus, die wahlweise zur Ausgabe von Kaffeepulver eingesetzt werden können. Neben der Auslasseinheit 25 ist ein Heisswasserauslass 14 zu sehen, der heisses Wasser zum Vorwärmen oder Aufbrühen von Tee bereitstellt.

Fig. 2 zeigt den stark vereinfachten inneren Aufbau eines solchen Kaffeeautomaten 10. Er umfasst die beiden Kaffeemühleneinheiten 11 und 12, eine Hydraulikeinheit 19, die für die Erzeugung von Heisswasser und Heissdampf zuständig ist, die eigentliche Brüheinheit 20 und eine (zentrale) Maschinensteuerung 18, die den Vorgang der Getränkezubereitung steuert und mit der über eine kombinierte Bedien- und Anzeigeeinheit 13, die in Form einer Touchscreen ausgebildet sein kann, kommuniziert wird. Mit der Maschinensteuerung 18 kann eine drahtlose (oder auch drahtgebundene) Kommunikationseinheit 17 verbunden sein, über die der Kaffeeautomat von aussen Daten empfangen oder Daten nach aussen senden kann.

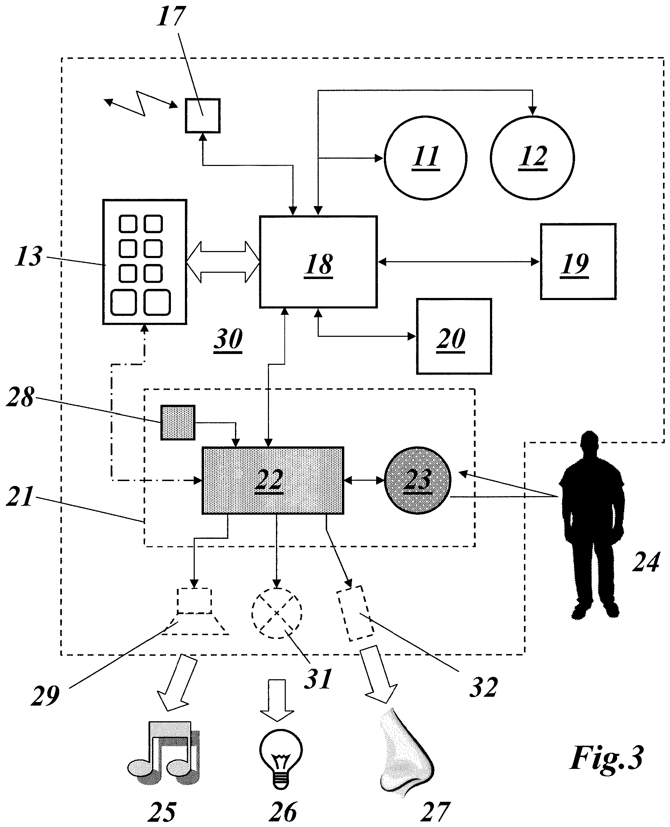

Für die Interaktionsfähigkeit mit potentiellen Kunden gemäss der Erfindung wird der Kaffeeautomat nun um einige Elemente erweitert, die in Fig. 3 in vereinfachter Form wiedergegeben sind.

Der Kaffeeautomat 30 der Fig. 3 weist im oberen Teil dieselben Grundelemente 11, 12, 13, 18, 19 und 20 auf, wie der Kaffeeautomat 10 aus Fig. 2. Neu hinzu kommt nun eine Interaktionseinheit 21, die eine Interaktionssteuerung 22, einen Personensensor 23 und in einer weiteren Ausbaustufe einen Zusatzsensor 28 umfasst. Die Interaktionssteuerung 22 kann als separate Steuerung ausgebildet sein und steht dann mit der Maschinensteuerung 18 in Verbindung, wenn die Interaktion sich z.B. nach dem Prozess der Getränkezubereitung richtet oder wenn die Interaktionssteuerung 22 mit der Kommunikationseinheit 17 Daten austauscht. Die Interaktionssteuerung 22 kann aber auch in die Maschinensteuerung 18 integriert sein, also beispielsweise durch denselben Mikroprozessor verwirklicht werden. In diesem Fall bestehen interne Verbindungen zwischen den beiden Steuerungen.

Der Personensensor 23 kann wie ein Bewegungsmelder auf die Annäherung einer Person 24 ansprechen. Er kann aber auch mit einer Kamera und entsprechender Bildauswertung realisiert sein und so nicht nur das Bewegungsprofil der Person 24 aufnehmen und auswerten, sondern weitere Personenmerkmale wie Alter, Geschlecht etc. erkennen und in die Interaktionssteuerung einfliessen lassen. Der Personensensor 23 ist mit der Interaktionssteuerung 22 verbunden und veranlasst die Interaktionssteuerung 22 bei Annäherung einer Person 24, vorbestimmte Interaktionen mit dieser Person 24 einzuleiten und deren Ablauf zu steuern. Die Auswahl der Art der Interaktion kann nach vorgegebenen Kriterien erfolgen, kann aber auch von äusseren Parametern wie Jahres- und Tageszeit, Temperatur, Helligkeit usw. beeinflusst werden. Einige derartige Einflüsse können z.B. von einem Zusatzsensor 28 erfasst werden, der mit der Interaktionssteuerung 22 verbunden ist.

Für die eigentliche Interaktion mit der Person 24 sind Einrichtungen für eine akustische Interaktion 25, für eine optische Interaktion 26 und eine olfaktorische Interaktion 27 mit der in der Nähe befindlichen Person 24 vorgesehen. Diese Einrichtungen umfassen im weitesten Sinne einen akustischen Wandler 29, beispielsweise einen Lautsprecher, ein Piezoelement einen Summer oder dgl., eine Lichtquelle 31, beispielsweise einen Laser, eine LED-Zeile, ein ansteuerbares Display, ein Elektrolumineszenzelement oder dgl., und einen Geruchsemitter 32, der als Sprüh- oder Gebläseeinheit in der Lage ist, Düfte oder Gerüche gezielt an die Umgebung abzugeben. Diese Einrichtungen 29, 31, 32 können - wie in Fig. 3 dargestellt - in den Getränkeautomaten 30 integriert sein. So können beispielsweise die Vorder- und/oder Seitenwände 34, 35, 36 beleuchtbar oder leuchtend ausgebildet sein, um variierende Lichteffekte zu erzeugen. Es ist aber auch denkbar, Zusatzgeräte wie Milcheinheiten zur Interaktion einzusetzen oder die Einrichtungen eigenständig ausserhalb der Maschine zu platzieren.

Der Getränkeautomat 30 kann somit auf unterschiedlicher Art Aufmerksamkeit erregen und Interaktion mit der Person 24 gestalten, nämlich durch:
- Aussehen (Lichteffekte, Wiedergabe von Filmsequenzen oder anderweitig bewegten Bildern usw.)
- Geräusch (Musik, Sprache, spezifische Geräusche oder Töne usw.)
- Duft (Kaffeeduft, Gewürzduft, Blütenduft, parfümartige Düfte usw.)

insbesondere kann der Kaffeeautomat 30 aktiv und individuell die potentiellen Kunden ansprechen. Zu diesem Zweck ist hilfreich, wenn der Personensensor 23 nicht nur erkennt, ob eine Person in der Nähe ist (sich nähert oder entfernt), sondern auch spezifische Personenmerkmale wie Alter Geschlecht, Grösse etc. erkennen kann.

Der Kaffeeautomat 30 kann auch mit dem Internet (zum Beispiel über Telemetrie, WLAN etc.) verbunden sein (Kommunikationseinheit 17) und sich Informationen geeigneter Art holen und die Informationen mit den Interaktions-Aktivitäten verknüpfen und weitergeben (Jahreszeit, Wetter, News etc.).

Die Interaktionen können auch Informationen umfassen, die die Maschine an die Kunden weitergeben soll. Derartige Informationen können z.B. von einem zentralen Ort aus gesteuert der Maschine übermittelt werden. Hier sind als Information beispielsweise Sonderangebote, kurzzeitige Aktionen etc. denkbar.

Die Maschine soll auf diese Weise auf sich aufmerksam machen, durch Starten einer Kommunikation (Interaktion) mit dem potentiellen Kunden.

Vorteilhaft ist dabei, wenn der Personensensor 23 erkennt, wie sich der Kunde verhält. Ob er zum Beispiel von der Maschine wegläuft oder sich nähert, ob er zögerlich ist oder sich entschlossen bewegt, und dgl..

Vorstellbar als Interaktion sind:
- Schwellendes pulsierendes Licht, ähnlich einem Herzschlag. Tritt der Kunde näher wird es intensiver. Die Maschine zeigt so "Emotionen"; denkbar ist auch, dass nur ein beleuchteter Firmen-Schriftzug in der Vorderwand pulsierend aufleuchtet.
- Ein Film könnte auf dem Display der Bedien- und Anzeigeeinheit 13 gezeigt werden, um positive Gefühle zu wecken.
- Lichteffekte könnten (z.B. durch Laserlicht) auf den Boden oder Wände unter oder neben dem Gerät projiziert werden.
- Texte mit Werbe- oder anderen Botschaften könnten optisch dargestellt oder gesprochen werden (sprechende Maschine)
- Musik (dezent) könnte die Stimmung der Kunden beeinflussen.
- Es könnten akustisch typische Geräusche ausgegeben werden, die mit Kaffee in Verbindung stehen (Mahlgeräusch, Brühgeräusch etc.)
- Irgendwelche Düfte (zum Beispiel angepasst an die Jahreszeit Kaffee, Vanille, Zimt etc.) könnten ausgegeben werden, um beim Kunden Assoziationen und positive Gefühle zu wecken (wie beim "Weihnachtsduft" Zimt).

Es ist aber auch denkbar, dass der Kaffeeautomat 30 im Rahmen der Interaktion dem Kunden anzeigt, in welchem Modus er ist und zwar wieder optisch, akustisch und olfaktorisch durch:
- Aussehen
- Geräusch
- Duft

Folgende Beispiele seine hier aufgezählt:
- Wenn in der Hydraulikeinheit 19 der Maschine die Boiler heizen -> Lichteffekte
- Wenn eine Kaffeemühleneinheit 11, 12 mahlt -> Film (auf dem Display)
- Wenn der Kaffee gebrüht wird -> Duft
- Kaffeeausgabe -> Lichtemotionen
- Ausgabe Cappuccino -> Musik

In jedem Fall ist es das Ziel, dass der Kaffeeautomat den Kunden mittels Emotionen in Bann ziehen soll.

### Bezugszeichenliste

- 10,30: Kaffeeautomat (Getränkeautomat)
- 11,12: Kaffeemühleneinheit
- 13: Bedien- und Anzeigeeinheit
- 14: Heisswasserauslass
- 15: Auslasseinheit
- 16: Auffangschale (mit Tropfgitter)
- 17: Kommunikationseinheit (drahtlos)
- 18: Maschinensteuerung (zentral)
- 19: Hydraulikeinheit
- 20: Brüheinheit
- 21: Interaktionseinheit
- 22: Interaktionssteuerung
- 23: Personensensor
- 24: Person
- 25: akustische Interaktion
- 26: optische Interaktion
- 27: olfaktorische Interaktion
- 28: Zusatzsensor (Temperatur, Helligkeit, Luftdruck etc.)
- 29: akustischer Wandler (Lautsprecher, Piezoelement etc.)
- 31: Lichtquelle (Lampe, LED, Laser, Elektrolumineszenzelement etc.)
- 32: Geruchsemitter
- 33: Gehäuse
- 34: obere Vorderwand
- 35: untere Vorderwand
- 36: Seitenwand

## Patentansprüche

1. Getränkeautomat (30), welcher erste Einrichtungen (11, 12, 15, 19, 20) zur Erzeugung und Ausgabe von Getränken umfasst, sowie zweite Einrichtungen (13) für die Bedienung durch den jeweiligen Kunden bzw. Konsumenten, **gekennzeichnet durch**
Interaktionsmittel (21, 22; 29, 31, 32), zur Interaktion mit einer in der Nähe des Getränkeautomaten (30) befindlichen Person (24) durch Aussenden von Klängen, Lichteffekten oder Gerüchen, auf welche nach Empfang durch Ohr, Auge oder Nase der Person die Person reagieren kann;
dritte Einrichtungen (29, 31, 32) für eine akustische (25) und/oder optische (26) und /oder olfaktorische (27) Interaktion mit einer in der Nähe befindlichen Person (24), wobei die dritten Einrichtungen (29, 31, 32) einen akustischen Wandler (29) und/oder eine Lichtquelle (31) und/oder einen Geruchsemitter (32) umfassen;
wobei die zusätzlichen Interaktionsmittel eine Interaktionssteuerung (22) umfassen, welche mit den dritten Einrichtungen verbunden ist; und
einen Personensensor (23) zur Detektion einer in der Nähe des Getränkeautomaten (30) befindlichen Person (24), wobei der Personensensor mit der Interaktionssteuerung in Verbindung steht, und das Bewegungsprofil der Person aufnehmen kann.

2. Getränkeautomat nach Anspruch 1, **dadurch gekennzeichnet, dass** die dritten Einrichtungen (29, 31, 32) in den Getränkeautomaten (30) integriert sind.

3. Getränkeautomat nach Anspruch 1, **dadurch gekennzeichnet, dass** der Getränkeautomat (30) eine Maschinensteuerung (18) für die Erzeugung und Ausgabe von Getränken umfasst, und dass die Interaktionssteuerung (22) mit der Maschinensteuerung (18) verbunden ist oder in die Maschinensteuerung (18) integriert ist.

4. Getränkeautomat nach Anspruch 1, **dadurch gekennzeichnet, dass** der Getränkeautomat (30) einen Zusatzsensor (28), insbesondere zur Detektion von Umwelteinflüssen wie Temperatur, Helligkeit, Feuchtigkeit, Luftdruck usw., aufweist, und dass der Zusatzsensor (28) mit der Interaktionssteuerung (22) in Verbindung steht.

5. Getränkeautomat nach Anspruch 1, **dadurch gekennzeichnet, dass** der Getränkeautomat (30) Anzeigeeinrichtungen (13) aufweist, und dass die Interaktionssteuerung (22) mit den Anzeigeeinrichtungen (13) in Verbindung steht.

6. Getränkeautomat nach Anspruch 1, **dadurch gekennzeichnet, dass** der Getränkeautomat (30) eine Kommunikationseinheit (17) aufweist, und dass die Interaktionssteuerung (22) mit der Kommunikationseinheit (17) in Verbindung steht.

7. Getränkeautomat nach Anspruch 6, **dadurch gekennzeichnet, dass** der Getränkeautomat (30) über die Kommunikationseinheit (17) drahtgebunden oder drahtlos mit dem Internet oder einer anderen Datenübertragungsverbindung verbunden ist, um sich Informationen geeigneter Art zu holen oder zu empfangen und die Informationen mit den Interaktions-Aktivitäten zu verknüpfen und/oder weiterzugeben.

8. Getränkeautomat nach Anspruch 1, **dadurch gekennzeichnet, dass** der Getränkeautomat ein Kaffeeautomat (30) ist oder einen Kaffeeautomaten (30) umfasst.

9. Verfahren zum Betrieb eines Getränkeautomaten (30) nach einem der Ansprüche 1 bis 8, **dadurch gekennzeichnet, dass** die Interaktionsmittel (21, 22; 29, 31, 32) situationsbezogen aktiviert werden, wenn sich eine Person (24) dem Getränkeautomaten (30) nähert und von diesem erkannt wird,
wobei die Aktivierung der Interaktionsmittel (21, 22; 29, 31, 32) mit einer akustischen (25) und/oder optischen (26) und /oder olfaktorischen (27) Interaktion mit der in der Nähe befindlichen Person (24) verbunden ist.

10. Verfahren nach Anspruch 9, **dadurch gekennzeichnet, dass** die Interaktionsmittel (21, 22; 29, 31, 32) nach Massgabe zusätzlicher externer Parameter wie Jahreszeit, Tageszeit, Wetter, Temperatur, Helligkeit, Feuchtigkeit, Luftdruck usw. aktiviert werden.

11. Verfahren nach Anspruch 9, **dadurch gekennzeichnet, dass** die akustische Interaktion (25) Musik und/oder Sprache und/oder Geräusche umfasst.

12. Verfahren nach Anspruch 9, **dadurch gekennzeichnet, dass** die optische Interaktion (26) Lichteffekte, insbesondere mit zeitlich, z.B. periodisch, sich ändernder Farbe und/oder Intensität, umfasst.

13. Verfahren nach Anspruch 9, **dadurch gekennzeichnet, dass** die olfaktorische Interaktion (27) das Aussenden von wohlriechenden Düften, insbesondere Kaffeeduft, Vanille, Zimt etc., umfasst.

14. Verfahren nach Anspruch 9, **dadurch gekennzeichnet, dass** über eine Kommunikationseinheit (17) drahtgebunden oder drahtlos über das Internet oder eine andere Datenübertragungsverbindung Informationen geeigneter Art geholt oder empfangen und die Informationen mit den Interaktions-Aktivitäten verknüpft und/oder weitergegeben werden.

## Claims

1. Beverage machine (30), comprising first devices (11, 12, 15, 19, 20) for producing and dispensing beverages and second devices (13) for the operation by the respective customers or consumers, **characterized by**
interaction means (21, 22; 29, 31, 32) for interaction with a person (24) located near the beverage machine (30) by emitting sounds, light effects or scents to which the person can react after reception through ear, eye or nose of the person;
third devices (29, 31, 32) for acoustic (25) and/or optical (26) and/or olfactory (27) interaction with a nearby person (24), wherein the third devices (29, 31, 32) comprise an acoustic transducer (29) and/or a light source (31) and/or a scent emitter (32);
wherein the additional interaction means comprise an interaction controller (22) connected to the third devices; and
a person sensor (23) for detecting a person (24) located near the beverage machine (30), wherein the person sensor is connected to the interaction controller and can record the movement profile of the person.

2. Beverage machine according to Claim 1, **characterized in that** the third devices (29, 31, 32) are integrated in the beverage machine (30).

3. Beverage machine according to Claim 1, **characterized in that** the beverage machine (30) comprises a machine controller (18) for producing and dispensing beverages, and **in that** the interaction controller (22) is connected to the machine controller (18) or is integrated in the machine controller (18).

4. Beverage machine according to Claim 1, **characterized in that** the beverage machine (30) has an additional sensor (28), in particular for detecting environmental influences such as temperature, brightness, humidity, air pressure, etc., and **in that** the additional sensor (28) is connected to the interaction controller (22).

5. Beverage machine according to Claim 1, **characterized in that** the beverage machine (30) has indication devices (13) and **in that** the interaction controller (22) is connected to the indication devices (13).

6. Beverage machine according to Claim 1, **characterized in that** the beverage machine (30) has a communication unit (17) and **in that** the interaction controller (22) is connected to the communication unit (17).

7. Beverage machine according to Claim 6, **characterized in that** the beverage machine (30) is connected, via the communication unit (17), to the internet or to another data transfer link either by wire or wirelessly in order to retrieve or receive information of a suitable type and to link the information to the interaction activities and/or to pass it on.

8. Beverage machine according to Claim 1, **characterized in that** the beverage machine is a coffee machine (30) or comprises a coffee machine (30).

9. Method for operating a beverage machine (30) according to one of Claims 1 to 8, **characterized in that** the interaction means (21, 22; 29, 31, 32) are activated, depending on a situation, when a person (24) approaches the beverage machine (30) and is identified by the latter,
wherein the activation of the interaction means (21, 22; 29, 31, 32) is associated with an acoustic (25) and/or optical (26) and/or olfactory (27) interaction with the nearby person (24).

10. Method according to Claim 9, **characterized in that** the interaction means (21, 22; 29, 31, 32) are activated according to additional external parameters, such as time of year, time of day, weather, temperature, brightness, humidity, air pressure, etc.

11. Method according to Claim 9, **characterized in that** the acoustic interaction (25) comprises music and/or speech and/or sounds.

12. Method according to Claim 9, **characterized in that** the optical interaction (26) comprises light effects, in particular with a colour and/or intensity that changes with time, e.g. periodically.

13. Method according to Claim 9, **characterized in that** the olfactory interaction (27) comprises emitting pleasantly smelling scents, in particular the scent of coffee, vanilla, cinnamon, etc.

14. Method according to Claim 9, **characterized in that** information of a suitable type is retrieved or received, via a communication unit (17), by way of the internet or another data transfer link either by wire or wirelessly, and the information is linked to the interaction activities and/or passed on.

## Revendications

1. Distributeur automatique de boissons (30), comprenant des premiers systèmes (11, 12, 15, 19, 20) pour la production et la distribution de boissons, ainsi que des deuxièmes systèmes (13) pour l'utilisation par le client ou consommateur respectif, **caractérisé par**
des moyens d'interaction (21, 22 ; 29, 31, 32) permettant d'interagir avec une personne (24) située à proximité du distributeur automatique de boissons (30) par émission de sons, d'effets lumineux ou d'odeurs auxquels la personne peut réagir après qu'ils ont été reçus par l'oreille, l'œil ou le nez de la personne ;
des troisièmes systèmes (29, 31, 32) permettant une interaction acoustique (25) et/ou optique (26) et/ou olfactive (27) avec une personne (24) située à proximité, dans lequel les troisièmes systèmes (29, 31, 32) comprennent un transducteur acoustique (29) et/ou une source de lumière (31) et/ou un émetteur d'odeurs (32) ;
dans lequel les moyens d'interaction supplémentaires comprennent un dispositif de commande d'interaction (22) relié aux troisièmes systèmes ; et
un capteur de personne (23) permettant la détection d'une personne (24) se trouvant à proximité du distributeur automatique de boissons (30), dans lequel le capteur de personne est relié au dispositif de commande d'interaction et peut enregistrer le profil de mouvement de la personne.

2. Distributeur automatique de boissons selon la revendication 1, **caractérisé en ce que** les troisièmes systèmes (29, 31, 32) sont intégrés au distributeur automatique de boissons (30).

3. Distributeur automatique de boissons selon la revendication 1, **caractérisé en ce que** le distributeur automatique de boissons (30) comprend un dispositif de commande de machine (18) pour la production et la distribution de boissons, et **en ce que** le dispositif de commande d'interaction (22) est relié au dispositif de commande de machine (18) ou est intégré au dispositif de commande de machine (18).

4. Distributeur automatique de boissons selon la revendication 1, **caractérisé en ce que** le distributeur automatique de boissons (30) comporte un capteur supplémentaire (28), permettant en particulier la détection d'influences de l'environnement telles que la température, la luminosité, l'humidité, la pression atmosphérique, etc., et **en ce que** le capteur supplémentaire (28) est relié au dispositif de commande d'interaction (22).

5. Distributeur automatique de boissons selon la revendication 1, **caractérisé en ce que** le distributeur automatique de boissons (30) comporte des dispositifs d'affichage (13), et **en ce que** le dispositif de commande d'interaction (22) est relié aux dispositifs d'affichage (13).

6. Distributeur automatique de boissons selon la revendication 1, **caractérisé en ce que** le distributeur automatique de boissons (30) comporte une unité de communication (17), et **en ce que** le dispositif de commande d'interaction (22) est relié à l'unité de communication (17).

7. Distributeur automatique de boissons selon la revendication 6, **caractérisé en ce que** le distributeur automatique de boissons (30) est relié au moyen de l'unité de communication (17) par fil ou sans fil à l'internet ou à une autre liaison de transmission de données afin d'obtenir ou de recevoir des informations de type approprié et de combiner lesdites informations avec les activités d'interaction et/ou de transmettre lesdites informations.

8. Distributeur automatique de boissons selon la revendication 1, **caractérisé en ce que** le distributeur automatique de boissons est un distributeur automatique de café (30) ou comprend un distributeur automatique de café (30).

9. Procédé pour faire fonctionner un distributeur automatique de boissons (30) selon l'une des revendications 1 à 8, **caractérisé en ce que** les moyens d'interaction (21, 22 ; 29, 31, 32) sont activés en fonction de la situation lorsqu'une personne (24) s'approche du distributeur automatique de boissons (30) et est reconnue par celui-ci,
dans lequel l'activation des moyens d'interaction (21, 22 ; 29, 31, 32) est liée à une interaction acoustique (25) et/ou optique (26) et/ou olfactive (27) avec la personne (24) se trouvant à proximité.

10. Procédé selon la revendication 9, **caractérisé en ce que** les moyens d'interaction (21, 22; 29, 31, 32) sont activés conformément à des paramètres externes supplémentaires tels que la saison, l'heure du jour, la météo, la température, la luminosité, l'humidité, la pression atmosphérique, etc.

11. Procédé selon la revendication 9, **caractérisé en ce que** l'interaction acoustique (25) comprend de la musique et/ou de la parole et/ou des sons.

12. Procédé selon la revendication 9, **caractérisé en ce que** l'interaction optique (26) comprend des effets lumineux, en particulier avec un changement de couleur et/ou d'intensité dans le temps, par exemple périodiquement.

13. Procédé selon la revendication 9, **caractérisé en ce que** l'interaction olfactive (27) comprend l'émission d'odeurs parfumées, en particulier l'odeur de café, de vanille, de cannelle, etc.

14. Procédé selon la revendication 9, **caractérisé en ce que** des informations de type approprié sont obtenues ou reçues au moyen d'une unité de communication (17) par fil ou sans fil par l'intermédiaire d'internet ou d'une autre liaison de transmission de données et **en ce que** lesdites informations sont combinées avec les activités d'interaction et/ou transmises.
